# EUROPÄISCHE PATENTSCHRIFT

(11) **EP 3 293 166 B1**
(45) Veröffentlichungstag und Bekanntmachung des Hinweises auf die Patenterteilung: **06.01.2021**
(21) Anmeldenummer: 17186223.8
(22) Anmeldetag: 14.08.2017
(51) Int. Cl.: C05F 3/00, C05F 17/00

(54) **VERFAHREN ZUR HERSTELLUNG EINES STICKSTOFFANGEREICHERTEN ORGANISCHEN DÜNGERS SOWIE STICKSTOFFANGEREICHERTER ORGANISCHER DÜNGER**
METHOD FOR PRODUCING A NITROGEN- ENRICHED ORGANIC FERTILIZER AND NITROGEN-ENRICHED ORGANIC FERTILIZER
PROCÉDÉ DE FABRICATION D'ENGRAIS ORGANIQUES ENRICHI EN AZOTE AINSI QU'ENGRAIS ORGANIQUES ENRICHI EN AZOTE

(30) Priorität: 17.08.2016 DE 102016215359
(43) Veröffentlichungstag der Anmeldung: 14.03.2018
(73) Patentinhaber: M 4 Bio GmbH & Co. KG Naturstoffverarbeitung und Bioenergie, 16727 Oberkrämer (DE)
(72) Erfinder: REILING, Manfred, 16727 Oberkrämer (DE)
(74) Vertreter: Maikowski & Ninnemann Patentanwälte Partnerschaft mbB

(56) Entgegenhaltungen:
- WO-A1-2013/028776
- AT-B- 110 536
- DE-A1-102004 017 876
- DE-A1-102008 019 299
- GB-A- 179 198

## Beschreibung

Die vorliegende Erfindung betrifft ein Verfahren zur Herstellung eines stickstoffangereicherten organischen Düngers gemäß dem Oberbegriff des Anspruchs 1 sowie einen stickstoffangereicherten organischen Dünger gemäß dem Oberbegriff des Anspruchs 10.

Aus dem Stand der Technik sind zahlreiche organische Dünger bekannt, die häufig aus aufbereitetem Tiermist bestehen. Problematisch an diesen organischen Düngern ist jedoch die Nährstoffzusammensetzung. So enthalten diese organischen Dünger regelmäßig zu wenig Stickstoff, um damit zu düngenden Pflanzen eine ausreichende Stickstoffzufuhr zu ermöglichen.

Gemäß dem Stand der Technik werden daher organische Dünger häufig mit künstlichen, anorganischen Düngern versetzt, die einen höheren Stickstoffanteil aufweisen. Dies ist jedoch kostspielig und erfordert das umständliche Einmischen eines anorganischen Düngers.

Aus dem Stand der Technik ist zudem bekannt, eine zu düngende Fläche zunächst mit einem organischen Dünger zu düngen und anschließend mit einem anorganischen Dünger, um für eine ausreichende Stickstoffanreicherung zu sorgen. Auch dieses Verfahren ist umständlich, da zwei Düngeschritte erforderlich sind.

Für einen Stickstoffeintrag in einen Boden ist zudem bekannt, Pflanzen wie etwa Lupinen, die in Symbiose mit stickstofffixierenden Bakterien leben, auf einer Anbaufläche anzubauen und anschließend unterzupflügen (Gründüngung). Aber auch dieses Verfahren ist verhältnismäßig aufwendig, da auf der entsprechenden Anbaufläche während der Gründüngung keine anderen Pflanzen angebaut werden können.

Die WO 2013/109153 A1 beschreibt einen bioorganischen Dünger, der eine definierte Zusammensetzung bestimmter Mikroorganismen aufweist. Zur Herstellung dieses Düngers ist es vorgesehen, Tiermist mit einer verdünnten aktivierten mikrobiologischen Formulierung zu versetzen, um die gewünschte Mikroorganismenzusammensetzung im Dünger zu erhalten. Die WO 2013/128080 A1 beschreibt eine Düngemittelzusammensetzung, die eine Kohlenstoffquelle und eine Stickstoffquelle aufweist, wobei das Verhältnis von Kohlenstoff zu Stickstoff innerhalb eines definierten Bereichs liegt.

Die WO 91/17130 A1 beschreibt eine Düngemittelzusammensetzung, die organischen Mist enthält, wobei ein Feuchtigkeitsgehalt der Zusammensetzung bei weniger als 20 % liegt und ein Fasergehalt der Zusammensetzung zwischen 10 % und 70 % beträgt.

Die DE 10 2012 112 898 A1 beschreibt ein Verfahren zur Herstellung von Biogas aus lignocellulosehaltiger Biomasse.

Die WO 2013/028776 A1 beschreibt ein Verfahren zur Behandlung von tierischen Abfällen sowie daraus enthaltene Düngemittel.

In der DE 10 2008 019 299 A1 wird die Herstellung von sterilem Bodensubstrat aus kompostiertem tierischem Kot beschrieben.

Die DE 10 2004 017 876 A1 beschreibt ein Verfahren zur Herstellung von anorganischen oder organisch-anorganischen Düngemitteln.

In der AT 110 536 B wird ein Verfahren zur Aufbereitung von Stallmist, Sauerfutter und anderen gärfähigen Substanzen beschrieben.

Die GB 179198 A beschreibt Stallmist oder anderes organisches Material für die Verwendung als Dünger.

Der vorliegenden Erfindung liegt die Aufgabe zugrunde, ein vereinfachtes Verfahren zur Herstellung eines stickstoffangereicherten organischen Düngers anzugeben sowie einen entsprechenden stickstoffangereicherten organischen Dünger bereitzustellen.

Diese Aufgabe wird mit einem Verfahren mit den Merkmalen des Anspruchs 1 gelöst. Ein solches Verfahren zur Herstellung eines stickstoffangereicherten organischen Düngers weist die nachfolgend erläuterten Schritte auf.

Zunächst wird Tiermist bereitgestellt. Dieser Tiermist kann beispielsweise bei verschiedenen Ställen, an denen er anfällt, eingesammelt werden. Dies kann durch sogenannte Selbstlader erfolgen. Bei größeren Stallanlagen, bei denen Container zur Sammlung von Tiermist aufgestellt sind, kann das Einsammeln des Tiermists problemlos über das existierende Containersystem erfolgen.

Anschließend wird der Tiermist auf einer Fläche in Form eines luftdurchlässigen Untergrundes ausgebreitet. Dabei wird darauf geachtet, dass der derart ausgebreitete Tiermist eine vordefinierte Maximalhöhe von 2 Metern nicht überschreitet.

Danach wird der derart ausgebreitete Tiermist während einer ersten Zeitdauer inkubiert. Die Inkubation erfolgt unter definierten und kontrollierten Bedingungen. Dadurch kommt es zu einem Wachstum von Pilzen, die bereits auf dem Tiermist vorhanden sind. Insbesondere wird die Inkubation. Die Inkubation wird derart ausgeführt, dass es zu einem Wachstum von Pilzen aus der Gruppe der Tintlinge kommt. Tintlinge haben die Eigenschaft, Stickstoff aus der Umgebung durch eigenes Wachstum zu fixieren. Das durch die Inkubation induzierte Pilzwachstum führt folglich dazu, dass Stickstoff, der in dem Tiermist enthalten ist, durch die Pilze fixiert wird. Dadurch wird dieser Stickstoff stickstoffabbauenden Vorgängen in dem Tiermist und Stickstoffauswaschungen aus dem Tiermist entzogen. Es erfolgt also eine Fixierung des Stickstoffs in dem Tiermist, sodass der derart behandelte Tiermist besser für Düngezwecke eingesetzt werden kann als Tiermist, bei dem Stickstoffverbindungen leicht abgebaut werden können, ohne zuvor von Pflanzen, zu deren Düngung der Tiermist eigentlich vorgesehen ist, aufgenommen zu werden.

Ein gutes Pilzwachstum wird dadurch erreicht, dass die Inkubation des Tiermists bei einer Temperatur erfolgt, bei der die Pilze, insbesondere die Tintlinge, gut wachsen können. Das Verfahren wird daher derart durchgeführt, dass die Temperatur während der Inkubation in einem Bereich von 15 °C bis 30 °C, insbesondere 20 °C bis 25 °C gehalten wird. Ein Temperaturbereich von 23 °C bis 27 °C ist dabei besonders bevorzugt.

Die erste Zeitdauer beträgt 1 Woche bis 10 Wochen, insbesondere 2 Wochen bis 9 Wochen, insbesondere 3 Wochen bis 8 Wochen, insbesondere 4 Wochen bis 7 Wochen, insbesondere 5 Wochen bis 6 Wochen oder eine beliebige andere Zeitdauer, die sich aus den vorgenannten Zahlenwerten bilden lässt. (beispielsweise 4 Wochen bis 6 Wochen etc.). Eine erste Zeitdauer von einer Woche bis 3 Wochen ist besonders geeignet.

Da die Pilze für ein geeignetes Wachstum eine bestimmte Feuchtigkeit benötigen, wird das Verfahren derart ausgeführt, dass der Tiermist während der ersten Zeitdauer einen Feuchtigkeitsgehalt bzw. Wassergehalt von 60 % oder mehr aufweist. Vorzugsweise liegt der Feuchtigkeitsgehalt bzw. Wassergehalt in einem Bereich von 60 % bis 95 %, insbesondere von 70 % bis 90 %, insbesondere von 75 % bis 80 %.

Zumindest während des Inkubationsschritts wird Luft durch den ausgebreiteten Tiermist und den luftdurchlässigen Untergrund geleitet. Zu diesem Zweck kann die Luft durch den Tiermist und den Untergrund geblasen oder gesaugt werden. Beispielsweise kann ein Gebläse an oder in einem Hohlraum unterhalb des luftdurchlässigen Untergrunds angeordnet sein und Luft durch den Untergrund und den Tiermist blasen oder saugen. Ein derartiges Durchleiten von Luft begünstigt aerobe Wachstumsbedingungen für Mikroorganismen, die im Tiermist enthalten sind.

Nach dem Ablauf der ersten Zeitdauer wird dem inkubierten Tiermist eine stickstoffhaltige organische Flüssigkeit zugesetzt. Diese stickstoffhaltige organische Flüssigkeit weist einen Feststoffanteil von mindestens 50 % und einen Stickstoffgehalt von mindestens 2 % auf. Durch diesen Zusatz wird der Gesamtstickstoffgehalt des Tiermists erhöht, wobei ein signifikanter Anteil des Stickstoff durch das während der Inkubation erreichte Pilzwachstum in den Pilzen gebunden und nach dem Ausbringen des stickstoffangereicherten organischen Düngers aus den Pilzen freigesetzt und von Pflanzen zum Wachstum aufgenommen werden kann. Gleichzeitig dient der Stickstoff aus der zugesetzten stickstoffhaltigen organischen Flüssigkeit zur Bereitstellung schneller verfügbaren Stickstoffs, sodass sich ein breites Verfügbarkeitsspektrum von Stickstoffverbindungen beim Einsatz des entsprechenden Düngers ergibt.

Der inkubierte und mit der stickstoffhaltigen organischen Flüssigkeit versetzte Tiermist wird nun getrocknet und kann anschließend in die zur Anwendung bestimmte Form überführt werden.

Während des gesamten Verfahrens kann dem Tiermist bei Bedarf bereits zuvor inkubierter Tiermist zugesetzt werden. Das Verfahren wird jedoch derart durchgeführt, dass dem Tiermist darüber hinaus keine weiteren Mikroorganismen zugesetzt werden können. Insbesondere werden dem Tiermist keine reinen Mikroorganismenlösungen wie etwa Bakterienlösungen zugesetzt, um die bakteriologische Zusammensetzung des Tiermists zu beeinflussen. Vielmehr befinden sich in dem Tiermist nach der Inkubation lediglich die Mikroorganismenspezies, die bereits initial im Tiermist enthalten waren. Durch die Inkubation kann sich durch natürliche Wachstumsvorgänge der Anteil bestimmter Mikroorganismen erhöhen, während sich der Anteil anderer Mikroorganismen erniedrigen kann. Hierauf wird jedoch kein aktiver Einfluss genommen. Dadurch lässt sich das vorliegend beanspruchte Verfahren deutlich kostengünstiger und weniger überwachungsintensiv durchführen als aus dem Stand der Technik bekannte Verfahren, bei denen eine bestimmte Mikroorganismenzusammensetzung innerhalb des erzeugten Düngers erreicht werden soll.

In einer Variante wird dem Tiermist während der Inkubation auch kein bereits zuvor inkubierter Tiermist zugesetzt. In dieser Variante wird also vollständig auf eine Zugabe von Mikroorganismen zu dem zu inkubierenden Tiermist verzichtet.

Alle Prozentangaben sind - sofern sich aus dem jeweiligen Zusammenhang nichts anderes ergibt oder explizit etwas anderes angegeben ist - als Massenprozent zu verstehen.

Die vordefinierte Maximalhöhe des Tiermists beim Ausbreiten beträgt in einer Variante des Verfahrens 1,5 m, insbesondere 1 m, insbesondere 75 cm, insbesondere 60 cm, insbesondere 55 cm, insbesondere 50 cm, insbesondere 40 cm, insbesondere 30 cm, insbesondere 20 cm, insbesondere 10 cm. Eine geeignete Maximalhöhe kann beispielsweise im Bereich von 10 cm bis 1 m oder in einem beliebigen anderen Intervall aus den zuvor genannten Werten (beispielsweise 20 cm bis 75 cm) liegen. Eine besonders geeignete maximale Höhe liegt in einem Bereich von 40 cm bis 60 cm.

Typischerweise weist Tiermist Stroh, Holz und Tierexkremente als Hauptbestandteile auf oder besteht vollständig aus diesen Bestandteilen. Bei dem erfindungsgemäß beanspruchten Verfahren ist die Anwesenheit von Holz nicht schädlich. Das ist insbesondere deswegen vorteilhaft, da mit Holz versetzter Tiermist im Regelfall kostenpflichtig abgeholt werden muss. Bei der Durchführung des erfindungsgemäß beanspruchten Verfahrens entfällt diese kostenpflichtige Entsorgung des Tiermists. Zudem wird gleichzeitig stickstoffangereicherter Tiermist hergestellt, der nachfolgend als organischer Dünger eingesetzt werden kann.

Um den Tiermist zusätzlich mit natürlicherweise im Tiermist vorkommenden Pilzen zu versetzen, kann dem Tiermist in einer Variante bereits gelagertes Substrat, also bereits in der Vergangenheit zur Erreichung eines Pilzwachstums inkubierter Tiermist, zugesetzt werden. Auf diese Weise erfolgt regelmäßig ein verbessertes Pilzwachstum während der Inkubation, da die Ausgangsmasse der während der Inkubation zu vermehrenden Pilze bereits höher ist. Dies resultiert letztlich in einer besseren Stickstofffixierung des in dem Tiermist enthaltenen Stickstoffs.

Um für ein optimales Pilzwachstum zu sorgen, wird der Tiermist in einer Variante vor dem Inkubationsschritt zerkleinert. Dabei kann die Zerkleinerung derart erfolgen, dass eine maximale Länge der in dem Tiermist enthaltenen Bestandteile bei 5 cm, insbesondere bei 4,5 cm, insbesondere bei 4 cm, insbesondere bei 3,5 cm, insbesondere bei 3 cm, insbesondere bei 2,5 cm, insbesondere bei 2 cm, insbesondere bei 1,5 cm und ganz besonders bei 1 cm liegt. Die maximale Länge der in dem Tiermist enthaltenen Bestandteile kann beispielsweise in einem Bereich von 1 cm bis 5 cm oder einem beliebigen anderen Intervall aus den zuvor genannten Werten (beispielsweise 1,5 cm bis 4,5 cm) liegen. Eine besonders geeignete maximale Länge liegt in einem Bereich von 1,5 cm bis 2,5 cm.

Wie bereits erwähnt, wird durch das Inkubieren ein Pilzwachstum erreicht. Dabei kommt es insbesondere zu einer Erhöhung der Masse von Pilzen aus der Gruppe der Tintlinge. Tintlinge sind besonders geeignete Pilze, um in dem Tiermist vorhandenen Stickstoff zu fixieren und bei der nachfolgenden Ausbringung des aus dem Tiermist hergestellten Düngers freizusetzen. Tintlinge lassen sich in die Gattungen Coprinus, Coprinellus, Coprinopsis und Parasola unterteilen. In einer Variante ist nach der Inkubation die Masse von Tintlingen aus einer, mehreren oder allen der vorgenannten Gattungen erhöht.

Das Ausbreiten des Tiermists bis zu der vordefinierten Maximalhöhe sorgt insbesondere für aerobe Wachstumsbedingungen während der Inkubationszeit, die für ein Pilzwachstum besonders geeignet sind. Vorzugsweise werden anaerobe Gebiete innerhalb des inkubierenden Tiermists vollständig vermieden, sodass keine anaeroben Abbauprozesse im Tiermist stattfinden können.

In einer weiteren Variante wird der Tiermist während der Inkubation bei einem pH-Wert von pH 5,0 bis pH 9,0, insbesondere pH 5,5 bis pH 8,5, insbesondere pH 6,0 bis pH 8,0, insbesondere pH 6,5 bis pH 7,5, insbesondere pH 6,8 bis pH 7,3, insbesondere pH 7,0 bis pH 7,5 gehalten. Zu diesem Zweck wird der pH-Wert des inkubierenden Tiermists vorzugsweise regelmäßig (beispielsweise in bestimmten Zeitabständen oder aber kontinuierlich) überwacht. Wenn der pH-Wert auf einen Wert ansteigt, der oberhalb des vorgenannten Bereiches liegt, müssen dem inkubierenden Tiermist pH-absenkende Mittel, wie beispielsweise sauer reagierende Substanzen oder Säuren, zugesetzt werden. Sinkt der pH-Wert auf einen Wert, der unterhalb des vorgenannten Bereiches liegt, müssen dem Tiermist pH-steigernde Substanzen, wie Basen oder alkalische Substanzen, zugesetzt werden. Auch durch den Zusatz von Zucker kann der pH-Wert beeinflusst werden, da das Angebot an Zucker ein in dem Tiermist während der Inkubation stattfindendes Bakterienwachstum beeinflusst, wodurch indirekt Einfluss auf den pH-Wert genommen wird.

Für ein gutes Pilzwachstum kann es vorteilhaft sein, wenn dem Tiermist Spurenelemente zugesetzt werden, wie dies in einer Variante des Verfahrens vorgesehen ist. Geeignete Spurenelemente zum Zusetzen sind Molybdän, Vanadium, Eisen, Schwefel, Kupfer, Chrom, Mangan, Selen, Zink etc.

In einer Variante weist die stickstoffhaltige organische Flüssigkeit einen Feststoffanteil von mindestens 55 %, insbesondere mindestens 60 %, insbesondere mindestens 65 %, insbesondere mindestens 70 %, insbesondere mindestens 75 %, insbesondere mindestens 80 %, insbesondere mindestens 85 %, insbesondere mindestens 85 % und ganz besonders mindestens 90 % auf. Geeignete Feststoffanteile liegen somit in einem Bereich von 50 % bis 90 % oder in einem beliebigen anderen Intervall, das aus den vorgenannten Werten gebildet werden kann (beispielsweise 55 % bis 85 %). Ein besonders geeigneter Feststoffanteil liegt in einem Bereich von 50 % bis 65 %.

In einer Variante weist die stickstoffhaltige organische Flüssigkeit einen Stickstoffanteil von mindestens 2,5 %, insbesondere mindestens 3 %, insbesondere mindestens 3,5 %, insbesondere mindestens 4 %, insbesondere mindestens 4,5 %, insbesondere mindestens 5 %, insbesondere mindestens 6 %, insbesondere mindestens 7 % und ganz besonders mindestens 8 % auf. Geeignete Stickstoffanteile liegen in einem Bereich von 2 % bis 8 % oder in einem beliebigen anderen Intervall, das aus den vorgenannten Werten gebildet werden kann. Ein Stickstoffanteil von 2 % bis 4 % ist dabei besonders geeignet.

In einer Variante handelt es sich bei der stickstoffhaltigen organischen Flüssigkeit um Kartoffelfruchtwasser, Treber wie etwa Biertreber, Melasse und/oder Vinasse. Das Kartoffelfruchtwasser kann beispielsweise in Form eines Kartoffelfruchtwasserkonzentrats eingesetzt werden, das auch unter der Abkürzung PPL (für den englischen Begriff "potato protein liquid") bekannt ist.

In einer Verfahrensvariante wird die stickstoffhaltige organische Flüssigkeit dem Tiermist in einer Menge von 0,1 kg bis 1 kg, insbesondere 0,2 kg bis 0,9 kg, insbesondere 0,3 kg bis 0,8 kg, insbesondere 0,4 kg bis 0,7 kg, insbesondere 0,5 kg bis 0,6 kg pro Kilogramm Tiermist zugegeben.

In einer Variante wird die biologische und/oder chemische Aktivität des Tiermists vor der Trocknung so weit unterbunden, dass während des Trocknungsprozesses keine biologischen oder chemischen Reaktionen mehr in dem stickstoffangereicherten Tiermist erfolgen können. Dieses Unterbinden kann beispielsweise dadurch bewerkstelligt werden, dass Säuren oder Basen zur Absenkung oder Anhebung des pH-Werts zugesetzt werden, um weitgehend alle Mikroorganismen in dem inkubierten Tiermist abzutöten. Alternativ oder zusätzlich ist auch eine kurzzeitige Temperaturerhöhung (wie etwa eine Pasteurisierung) möglich. Beispielsweise kann der inkubierte Tiermist für einige wenige Minuten (ca. 1 Minute bis 10 Minuten, insbesondere 2 Minuten bis 9 Minuten, insbesondere 3 Minuten bis 8 Minuten, insbesondere 4 Minuten bis 7 Minuten, insbesondere 5 Minuten bis 6 Minuten) auf eine Temperatur von mehr als 100 °C, insbesondere mehr als 120 °C, insbesondere mehr als 130 °C und ganz besonders mehr als 150 °C, erwärmt werden.

Um für eine einfache Verwendung des stickstoffangereicherten Düngers zu sorgen, wird der stickstoffangereicherte Tiermist in einer Variante nach der Trocknung pelletiert oder granuliert, um für eine geeignete Form bzw. Struktur des organischen Düngers zu sorgen, die seine Anwendung vereinfacht. Das Strukturierungsverfahren wird dabei vorzugsweise nach energetischen Gesichtspunkten ausgewählt, um die hierfür benötigte Energie möglichst gering zu halten.

In einer weiteren Variante wird dem bereits inkubierten Tiermist nach der ersten Zeitdauer ein Bodenhilfsstoff zugesetzt, um die Eigenschaften des erzeugten stickstoffangereicherten organischen Düngers nicht nur in Bezug auf seinen Stickstoffgehalt, sondern auch in Bezug auf weitere Bodenanforderungen zu optimieren. Bei dem Bodenhilfsstoff kann es sich beispielsweise um Biokohle oder um Bentonit oder ein anderes Tonmineral handeln.

In einer Variante erfolgt die Trocknung des inkubierten Tiermists schnell, damit das Ammonium/Ammoniak-Gleichgewicht nicht gestört wird und damit keine Stickstoffverluste auftreten können. Bei einer Störung des Ammonium/Ammoniak-Gleichgewichts könnte es zu einer Freisetzung des zuvor fixierten Stickstoffs kommen, wodurch die Stickstoffanreicherungseffizienz des Verfahrens beeinträchtigt wäre. Wenn die biologische und/oder chemische Aktivität des inkubierten Tiermists bereits unterbunden wurde, kann die Trocknung selbst auch langsam erfolgen.

In einer Variante wird der Tiermist vor dem Inkubieren zunächst einer Biogasanlage zugeführt, um Biogas aus dem Tiermist zu erzeugen. Dadurch ist es auf besonders vorteilhafte Weise möglich, einen Teil der Energie, die im Tiermist enthalten ist, aber für den organischen Dünger nicht notwendigerweise benötigt wird, zur Biogaserzeugung zu nutzen.

Das derart erzeugte Biogas kann in einer weiteren Variante beispielsweise zur Trocknung des bereits inkubierten Tiermists eingesetzt werden. Das heißt, es ist bei dieser Variante möglich, dass die für den Trocknungsprozess des inkubierten Tiermists erforderliche Energie aus dem zu trocknenden Tiermist selbst zu gewinnen. Dies ermöglicht eine äußerst energieeffiziente Durchführung des Verfahrens. Zudem erfährt der Tiermist durch die Biogaserzeugung bereits eine Strukturanpassung, die für die nachfolgende Inkubation vorteilhaft ist und ein leichteres Wachstum der Pilze innerhalb des derart strukturierten Tiermists möglich macht.

Wenngleich grundsätzlich verschiedene Arten von Tiermist eingesetzt werden können (entweder sortenrein oder als Mischung) hat es sich als besonders vorteilhaft herausgestellt, Pferdemist als Tiermist einzusetzen. Denn Pferdemist stellt ein für Pilze, insbesondere Tintlinge, besonders geeignetes Substrat dar. Zudem ist Pferdemist als organischer Dünger grundsätzlich gut geeignet. Durch eine Stickstofffixierung und Stickstoffanreicherung erfährt der Pferdemist dabei eine signifikante Aufwertung, die den Einsatz zusätzlicher anorganischer stickstoffhaltiger Dünger nicht mehr erforderlich macht.

Wie oben ausgeführt, wird der Tiermist vor dem Inkubationsschritt auf einem luftdurchlässigen Untergrund ausgebreitet. Beispielsweise eignet sich ein Spaltenboden wie etwa ein Teilspaltenboden oder ein Vollspaltenboden, wie er in Tierställen regelmäßig Anwendung findet, als luftdurchlässiger Untergrund. Das heißt, das Verfahren kann auf einem Untergrund durchgeführt werden, der im landwirtschaftlichen Bereich ohnehin regelmäßig zur Verfügung steht.

In einer Variante wird nicht nur während des Inkubationsschritts, sondern beispielsweise auch während des Schritts des Versetzens des Tiermists mit der stickstoffhaltigen organischen Flüssigkeit und/oder während des Trocknungsschritts Luft durch den ausgebreiteten Tiermist und den luftdurchlässigen Untergrund geleitet. Zu diesem Zweck kann die Luft durch den Tiermist und den Untergrund geblasen oder gesaugt werden. Beispielsweise kann ein Gebläse an oder in einem Hohlraum unterhalb des luftdurchlässigen Untergrunds angeordnet sein und Luft durch den Untergrund und den Tiermist blasen oder saugen. Ein derartiges Durchleiten von Luft begünstigt aerobe Wachstumsbedingungen für Mikroorganismen, die im Tiermist enthalten sind.

Die vorliegend beanspruchte Erfindung betrifft auch einen stickstoffangereicherten organischen Dünger, der durch ein Verfahren nach den vorherigen Erläuterungen erhältlich ist. Ein derartiger stickstoffangereicherter organischer Dünger unterscheidet sich von anorganischem Dünger oder künstlichem Dünger dadurch, dass er aus rein natürlichen Substanzen aufgebaut ist, also ein natürlicher Dünger ist. Ein solcher natürlicher oder organischer Dünger kann insbesondere vorteilhaft in der biologischen Landwirtschaft eingesetzt werden, in der der Einsatz künstlich erzeugter Düngemittel nicht gestattet ist. Es ist mit dem vorliegend beschriebenen und beanspruchten stickstoffangereicherten organischen Dünger also möglich, unter Einhaltung der Vorschriften für die biologische Landwirtschaft eine verbesserte Nährstoffversorgung von ökologisch erzeugten Pflanzen zu ermöglichen.

In einer Variante bezieht sich die vorliegende Erfindung daher auch auf die Verwendung des stickstoffangereicherten organischen Düngers in der biologischen Landwirtschaft (auch als ökologische Landwirtschaft, Ökolandbau oder alternative Landwirtschaft bezeichnet).

In einer Variante weist der stickstoffangereicherte organische Dünger einen Stickstoffgehalt von 2 % bis 12 %, insbesondere von 3 % bis 11 %, insbesondere von 4 % bis 10 %, insbesondere von 5 % bis 9 %, insbesondere von 6 % bis 8 %, insbesondere von 4,5 % bis 7 % auf. Dieser Stickstoffgehalt bezieht sich dabei in Form von Massenprozent auf die Gesamtmasse des getrockneten stickstoffangereicherten organischen Düngers, der eine Restfeuchte von maximal 20 % aufweist, insbesondere von maximal 15 %, insbesondere von maximal 12 %, insbesondere von maximal 10 %, insbesondere von maximal 8 %, insbesondere von maximal 6 % und ganz besonders von maximal 4 %. Beispielsweise kann die Restfeuchte in einem Bereich von 4 % bis 20 % oder in einem beliebigen anderen Bereich, der aus den vorgenannten Restfeuchtewerten aufgebaut werden kann, liegen (beispielsweise in einem Bereich von 6 % bis 15 % etc.).

## Patentansprüche

1. Verfahren zur Herstellung eines stickstoffangereicherten organischen Düngers, **gekennzeichnet durch** die folgenden Schritte:
a) Bereitstellen von Tiermist,
b) Ausbreiten des Tiermists auf einem luftdurchlässigen Untergrund bis zu einer Höhe, die eine vordefinierte Maximalhöhe von 2 Metern nicht überschreitet,
c) Inkubieren des Tiermists bei einer Temperatur von 15 °C bis 30 °C für eine erste Zeitdauer, die 1 Woche bis 10 Wochen beträgt, wobei Luft durch den ausgebreiteten Tiermist und den luftdurchlässigen Untergrund geleitet wird und der Tiermist während der ersten Zeitdauer einen Feuchtigkeitsgehalt von 60 % oder mehr aufweist wodurch sich durch das Inkubieren die Masse an Pilzen aus der Gruppe der Tintlinge in dem Tiermist erhöht.
d) Versetzen des inkubierten Tiermists mit einer stickstoffhaltigen organischen Flüssigkeit, die einen Feststoffanteil von mindestens 50 % und einen Stickstoffgehalt von mindestens 2 % aufweist, nach Ablauf der ersten Zeitdauer und
e) Trocknen des inkubierten und mit der stickstoffhaltigen organischen Flüssigkeit
versetzten Tiermists,
wobei dem Tiermist nur bereits zuvor inkubierter Tiermist zugesetzt werden kann, darüber hinaus jedoch keine Mikroorganismen zugesetzt werden.

2. Verfahren nach Anspruch 1, **dadurch gekennzeichnet, dass** dem in Schritt a) bereitgestellten Tiermist ein Anteil eines bereits zuvor während der ersten Zeitdauer inkubierten Tiermists zugesetzt wird.

3. Verfahren nach Anspruch 1 oder 2, **dadurch gekennzeichnet, dass** der Tiermist vor Schritt b) derart zerkleinert wird, dass einzelne Bestandteile des Tiermists eine Maximallänge von 5 cm nicht überschreiten.

4. Verfahren nach einem der vorherigen Ansprüche, **dadurch gekennzeichnet, dass** der Tiermist einen pH-Wert aufweist, der während der ersten Zeitdauer in einem Bereich von pH 5,0 bis pH 9,0 gehalten wird.

5. Verfahren nach einem der vorherigen Ansprüche, **dadurch gekennzeichnet, dass** der Tiermist während der ersten Zeitdauer einen Feuchtigkeitsgehalt von nicht weniger als 60 % aufweist.

6. Verfahren nach einem der vorherigen Ansprüche, **dadurch gekennzeichnet, dass** der Tiermist eine Temperatur aufweist, die während der ersten Zeitdauer in einem Bereich von 15 °C bis 40 °C gehalten wird.

7. Verfahren nach einem der vorherigen Ansprüche, **dadurch gekennzeichnet, dass** die stickstoffhaltige organische Flüssigkeit ausgewählt ist aus der Gruppe bestehend aus Kartoffelfruchtwasser, Treber, Melasse und Vinasse.

8. Verfahren nach einem der vorherigen Ansprüche, **dadurch gekennzeichnet, dass** die stickstoffhaltige organische Flüssigkeit dem Tiermist in einer Menge von 0,1 kg bis 1,0 kg pro kg Tiermist zugegeben wird.

9. Verfahren nach einem der vorherigen Ansprüche, **dadurch gekennzeichnet, dass** der Tiermist Pferdemist ist.

10. Stickstoffangereicherter organischer Dünger, erhältlich durch ein Verfahren nach einem der vorhergehenden Ansprüche.

11. Stickstoffangereicherter organischer Dünger nach Anspruch 10, **dadurch gekennzeichnet, dass** er einen Stickstoffgehalt von 2 % bis 12 %, bezogen auf die Gesamtmasse des getrockneten stickstoffangereicherten organischen Düngers mit einer Restfeuchte von maximal 20 %, aufweist.

## Claims

1. Method of producing a nitrogen-enriched organic fertilizer, **characterized by** the following steps:
a) providing animal manure,
b) spreading the animal manure on an air-permeable base up to a height not exceeding a predefined maximum height of 2 metres,
c) incubating the animal manure at a temperature of 15 °C to 30 °C for a first period of time of 1 week to 10 weeks, while passing air through the spread animal manure and the air-permeable base, where the animal manure has a moisture content of 60 % or more during the first period of time, the incubating resulting in an increase in the mass of fungi from the Coprinus group in the animal manure,
d) admixing the incubated animal manure with a nitrogen-containing organic liquid having a solids content of at least 50 % and a nitrogen content of at least 2 % after the first period of time has elapsed, and
e) drying the incubated animal manure that has been mixed with the nitrogen-containing organic liquid,
wherein only previously incubated animal manure can be added to the animal manure, but additionally no microorganisms are added.

2. Method according to Claim 1, **characterized in that** a proportion of an animal manure already incubated during the first period of time is added to the animal manure provided in step a).

3. Method according to Claim 1 or 2, **characterized in that** the animal manure is comminuted prior to step b) such that individual constituents of the animal manure do not exceed a maximum length of 5 cm.

4. Method according to any of the preceding claims, **characterized in that** the animal manure has a pH which is kept within a range from pH 5.0 to pH 9.0 during the first period of time.

5. Method according to any of the preceding claims, **characterized in that** the animal manure has a moisture content of not less than 60 % during the first period of time.

6. Method according to any of the preceding claims, **characterized in that** the animal manure has a temperature which is kept within a range from 15 °C to 40 °C during the first period of time.

7. Method according to any of the preceding claims, **characterized in that** the nitrogen-containing organic liquid is selected from the group consisting of potato fruit water, draff, molasses and vinasses.

8. Method according to any of the preceding claims, **characterized in that** the nitrogen-containing organic liquid is added to the animal manure in an amount of 0.1 kg to 1.0 kg per kg of animal manure.

9. Method according to any of the preceding claims, **characterized in that** the animal manure is horse manure.

10. Nitrogen-enriched organic fertilizer obtainable by a method according to any of the preceding claims.

11. Nitrogen-enriched organic fertilizer according to Claim 10, **characterized in that** it has a nitrogen content of 2 % to 12 %, based on the total mass of the dried nitrogen-enriched organic fertilizer having a residual moisture content of not more than 20 %.

## Revendications

1. Procédé de fabrication d'un engrais organique enrichi en azote, **caractérisé par** les étapes suivantes :
a) la préparation de fumier animal,
b) la dispersion du fumier animal sur un substrat perméable à l'air jusqu'à une hauteur qui ne dépasse pas une hauteur maximale prédéfinie de 2 mètres,
c) l'incubation du fumier animal à une température de 15 °C à 30 °C pendant une première durée, qui est de 1 semaine à 10 semaines, de l'air étant conduit au travers du fumier animal dispersé et du substrat perméable à l'air et le fumier animal présentant pendant la première durée une teneur en humidité de 60 % ou plus, l'incubation permettant ainsi d'augmenter la masse de champignons du groupe des coprins dans le fumier animal,
d) le mélange du fumier animal incubé avec un liquide organique azoté, qui présente une proportion de solides d'au moins 50 % et une teneur en azote d'au moins 2 %, après l'écoulement de la première durée, et
e) le séchage du fumier animal incubé et mélangé avec le liquide organique azoté,
uniquement du fumier animal déjà incubé auparavant pouvant être ajouté au fumier animal, mais aucun microorganisme ne pouvant toutefois être ajouté.

2. Procédé selon la revendication 1, **caractérisé en ce qu'**une proportion d'un fumier animal déjà incubé auparavant pendant la première durée est ajoutée au fumier animal préparé à l'étape a).

3. Procédé selon la revendication 1 ou 2, **caractérisé en ce que** le fumier animal est fragmenté avant l'étape b) de telle sorte que des constituants individuels du fumier animal ne dépassent pas une longueur maximale de 5 cm.

4. Procédé selon l'une quelconque des revendications précédentes, **caractérisé en ce que** le fumier animal présente un pH qui est maintenu pendant la première durée dans une plage allant de pH 5,0 à pH 9,0.

5. Procédé selon l'une quelconque des revendications précédentes, **caractérisé en ce que** le fumier animal présente pendant la première durée une teneur en humidité non inférieure à 60 %.

6. Procédé selon l'une quelconque des revendications précédentes, **caractérisé en ce que** le fumier animal présente une température qui est maintenue pendant la première durée dans une plage allant de 15 °C à 40 °C.

7. Procédé selon l'une quelconque des revendications précédentes, **caractérisé en ce que** le liquide organique azoté est choisi dans le groupe constitué par le jus de pomme de terre, le marc de raisin, la mélasse et la vinasse.

8. Procédé selon l'une quelconque des revendications précédentes, **caractérisé en ce que** le liquide organique azoté est ajouté au fumier animal en une quantité de 0,1 kg à 1,0 kg par kg de fumier animal.

9. Procédé selon l'une quelconque des revendications précédentes, **caractérisé en ce que** le fumier animal est un fumier de cheval.

10. Engrais organique enrichi en azote, pouvant être obtenu par un procédé selon l'une quelconque des revendications précédentes.

11. Engrais organique enrichi en azote selon la revendication 10, **caractérisé en ce qu'**il présente une teneur en azote de 2 % à 12 %, par rapport à la masse totale de l'engrais organique enrichi en azote séché ayant une humidité résiduelle d'au plus 20 %.
